# Europäisches Patentamt
# European Patent Office
# Office européen des brevets

(19)

(11) Publication number: **0 009 066**
**B1**

(12)

# EUROPEAN PATENT SPECIFICATION

(45) Date of publication of patent specification: **09.02.83**

(51) Int. Cl.³: **C 03 B 37/06, D 01 D 5/08**

(21) Application number: **78400093.7**

(22) Date of filing: **11.09.78**

(54) Method for manufacturing fibres by jet attenuation.

(43) Date of publication of application:
**02.04.80 Bulletin 80/7**

(45) Publication of the grant of the patent:
**09.02.83 Bulletin 83/6**

(84) Designated Contracting States:
**BE CH DE FR GB LU NL SE**

(56) References cited:
**DE - A - 1 421 680**
**DE - B - 2 414 779**
**DE - C - 807 131**
**FR - A - 2 223 318**
**FR - A - 2 374 440**
**US - A - 2 126 411**
**US - A - 2 982 991**
**US - A - 4 015 964**

(73) Proprietor: **SAINT-GOBAIN INDUSTRIES**
**62, Bd Victor Hugo**
**F-92209 Neuilly sur Seine (FR)**

(72) Inventor: **Levecque, Marcel**
**Flowing Springs Road**
**Birchrunville Pennsylvania, 19421 (US)**
Inventor: **Battigelli, Jean A.**
**17 Rue Edouard Vaillant**
**F-60290 Rantigny (FR)**
Inventor: **Plantard, Dominique**
**16 Route de Mouy**
**F-60290 Rantigny (FR)**

(74) Representative: **Eudes, Marcel et al,**
**Saint-Gobain Recherche 39 Quai Lucien Lefranc**
**F-93304 Aubervilliers Cedex (FR)**

Courier Press, Leamington Spa, England

## Method for manufacturing fibres by jet attenuation

This invention relates to the fiberization of attenuable materials and is adapted for use in the formation of fibers from various thermoplastic mineral materials, such as glass and similar compositions which are rendered molten by heating. Since the technique of the invention is especially useful in the attenuation of glass and similar thermoplastic materials, the following description refers to the use of glass by way of illustration.

In the attenuation of molten glass in order to effect fiberization by various techniques employing gaseous attenuating blasts or jets, it is ordinarily desirable to arrange the attenuation components and the means for intrducing the molten glass in a manner avoiding substantial fragmentation of the glass, the avoidance of such fragmentation being desirable in order to provide for the production of fibers of good length. In addition, in techniques of this type, it is also desirable to provide for fiber production with a minimum expenditure of heat or energy.

The technique of the present invention is adapted.to achieve these general purposes; and at the same time, to accomplish certain other objectives, as will be explained more fully as this description proceeds.

Certain techniques employing whirling currents to produce fibers by the attenuation of molten glass are already known.

In particular, FR—A—2 223 318 describes the formation of pairs of counter-rotating tornadoes in a zone of interaction produced by directing a gaseous jet known as secondary jet or carrier jet to a main gas current of larger dimensions and causing it to penetrate said current, a stream of molten glass being delivered into this zone to be attenuated there.

Various types of apparatus used for the attenuation of a material in a zone of interaction have already been described in the above mentioned patent and in US—A—4 015 964 filed in the name of the Applicant.

Attenuation of thermoplastic materials such as glass must of necessity be carried out at a high temperature. The glass is melted and the temperature of the attenuating gas in contact with the stream of material and with the forming fibre should also preferably be sufficiently high to maintain the glass at the high temperature required for attenuation.

In FR—A—2 374 440 the secondary gas jet and the main current are both at relatively high temperatures.

The main current contains large volumes of gas and only a portion of this gas is used for attenuation of the thermoplastic material in the zone of interaction, heating of all the gas in the main current to relatively high temperatures entails considerable losses of energy or heat.

Whirling currents may be obtained in the jets as disclosed in French patent n°. 76 37884.

The modification of the jets resulting in the formation of a stable zone of laminar flow situated between two counter-rotating tornadoes, is produced by interposing a deflector in the path of the jets.

In the technique provided according to the present invention provision is made for the development of a plurality of pairs of side-by-side gaseous jets of substantially equal kinetic energy per unit of volume with the axes of the jets of each pair disposed in substantially the same plane and with the jets inducing ambient gas and converging to a zone of impact and lateral spreading of the combined jet flow, the pairs of jets being sufficiently close to each other, so that the combined flows of the pairs of jets impinge upon each other laterally. The impingement of the pairs of spreading jets upon each other results in the development of pairs of counter-rotating tornadoes, with an intervening zone of laminar flow therebetween. The tornadoes merge downstream of the zone of laminar flow and a stream of molten glass is delivered into each zone of laminar flow from a point offset toward one side of both jets of the pair. This stream is carried by the laminar flow into the influence of the merging flow of the tornadoes. In addition, in accordance with the technique of the present application, the jets comprise fuel and comburant components in proportions providing a combustible in the combined flow of each pair of jets. Moreover, in accordance with the technique of the present application, conditions are maintained in order to provide for ignition of the combustible mixture in the combined jet flow of each pair of jets, so that a localized elevated attenuating temperature is provided in the jet flow itself, thereby providing for attenuation of long fibers even without employment of a blast into which the jets are delivered, as in the prior technique referred to above.

The "energy localization" provided by the present invention in the manner just referred to thus provides for energy conservation within the jet system itself, thereby simplifying the equipment since it is not necessary to provide a means for generating a larger blast, as in the prior technique above described.

The technique of the present invention also is particularly advantageous for the attenuation of very hard glass which requires relatively high temperature in order to obtain appropriate viscosity for fiberization. Such relatively high fiberization temperature can readily be attained within the jet flow itself, in view of which the glass supply equipment, such as a bushing, may be maintained at lower temperature than would be otherwise required. This, in turn, is of advantage because with hard glasses requiring high temperatures for effective fiberization, such high temperatures detrimentally affect the glass supply bushing or equivalent glass supply means.

Several forms of equipment suitable for carrying out the technique of the present application are disclosed in the accompanying drawings, in which:

Figure 1 is a somewhat schematic outline view of one form of equipment employing a twin jet system for fiberization and for energy localization in the attenuation zone, this view also somewhat diagrammatically indicating a fiber-collecting system;

Figure 2 is a fragmentary enlarged view of one pair of jets of a system of the kind shown in Figure 1, with certain parts shown in section;

Figure 3 is a perspective somewhat diagrammatical illustration of the equipment shown in Figures 1 and 2 and illustrating the combined jet flow of several pairs of jets;

Figure 4 is a fragmentary face view of a portion of the jet delivery device of Figures 1 to 3 inclusive;

Figure 5 is a fragmentary sectional view similar to a portion of Figure 2 but illustrating a modified form of the jet delivery device;

Figure 6 is a fragmentary perspective view of another modified form of jet delivery device; and

Figure 7 is a view similar to Figure 2 but illustrating another modified twin jet arrangement useable according to the present invention.

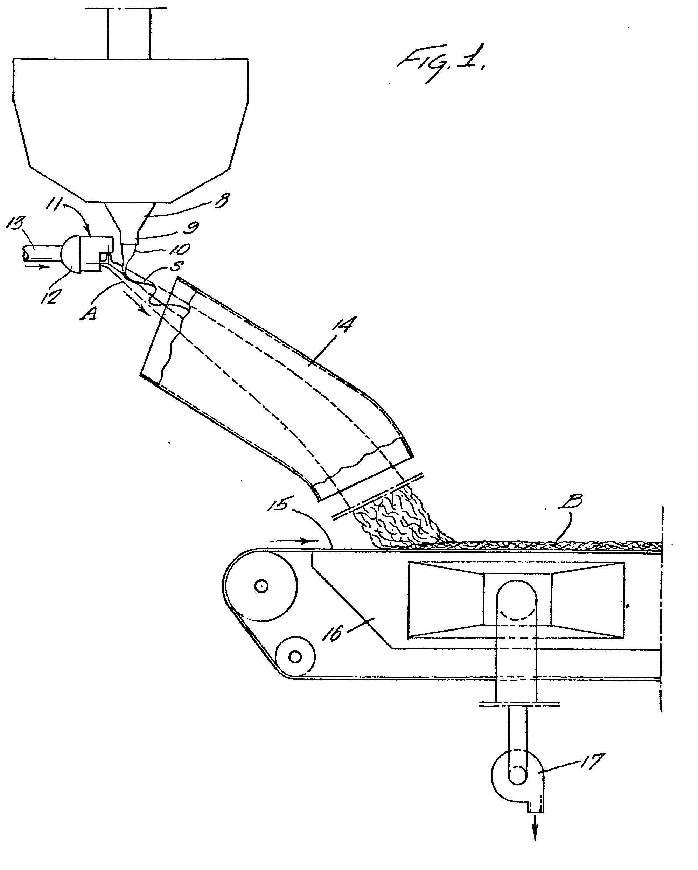

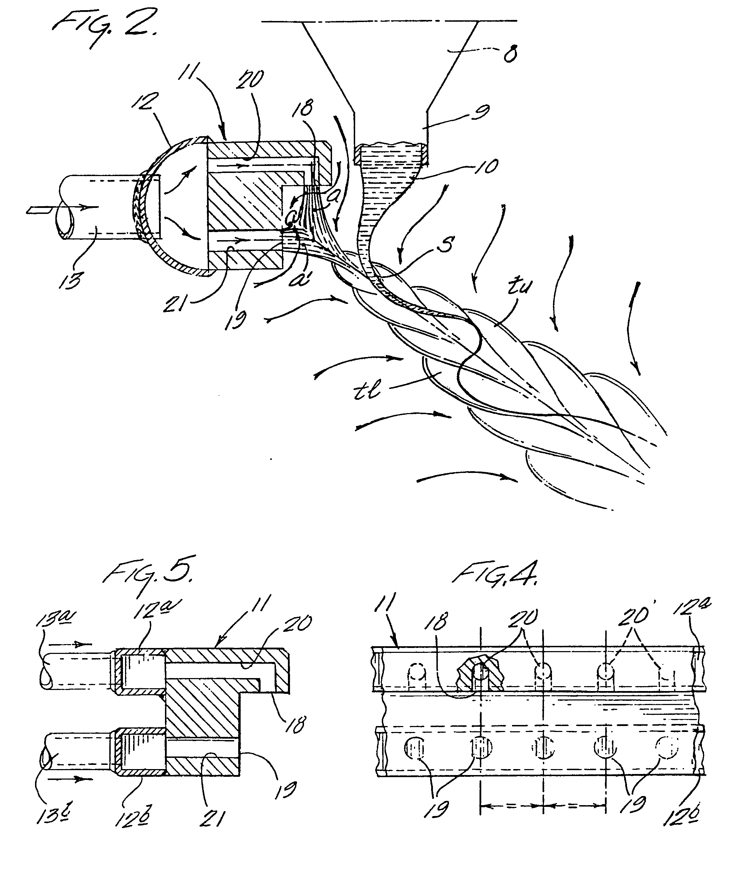

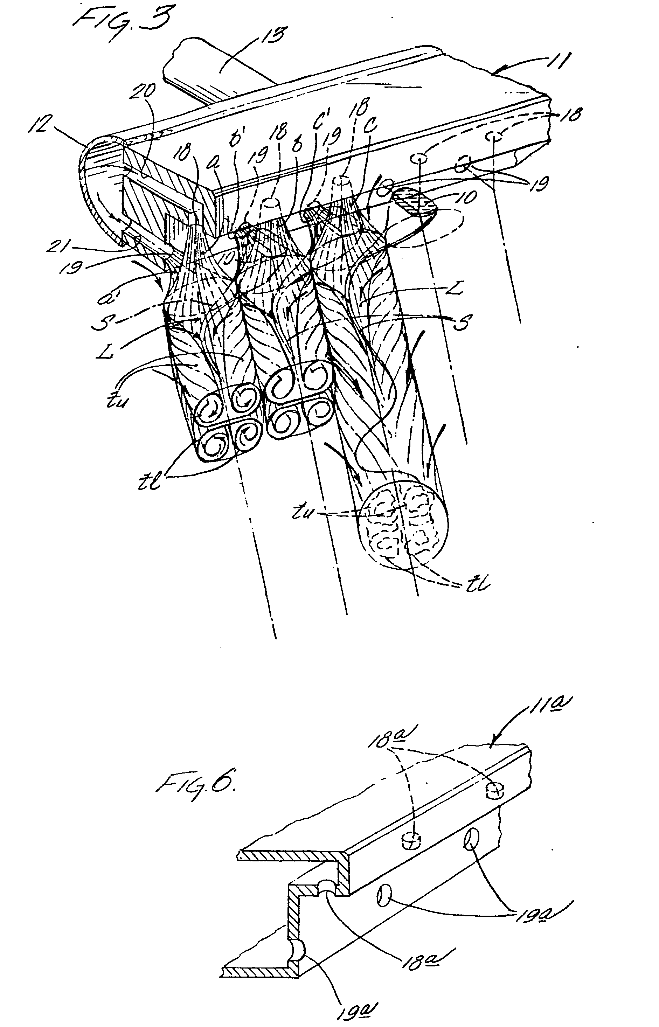

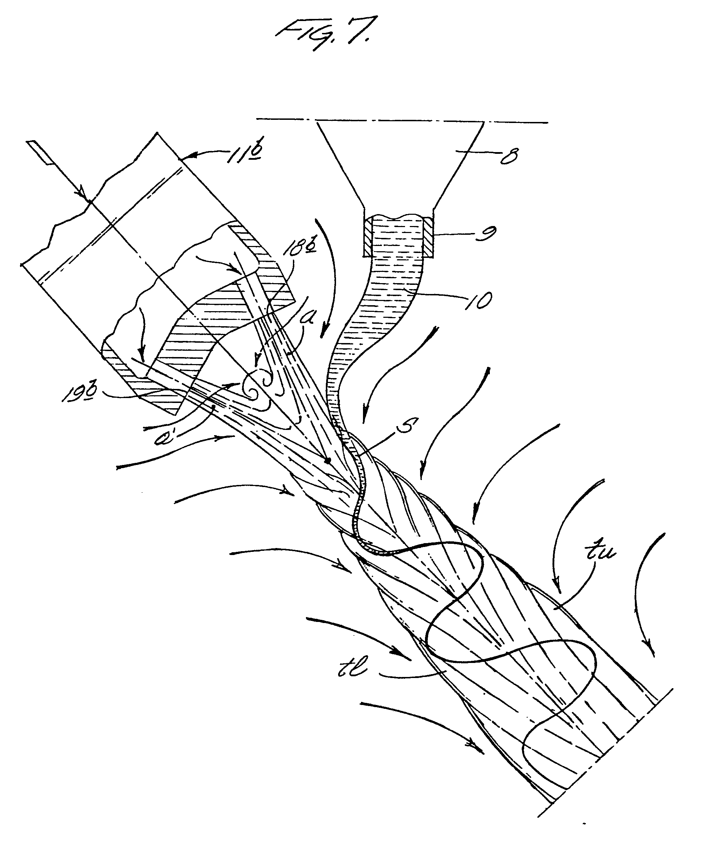

In the following description, reference is first made to the embodiment or structural arrangement shown in Figures 1 to 4 inclusive of the drawings.

In the overall general view of Figure 1, a molten glass supply bushing is indicated at 8, the bushing preferably having a series of delivery devices 9, each with an orifice for discharging molten glass in the form of tips or bulbs such as indicated at 10, which are delivered downwardly into the influence of the gaseous jets in a manner described more fully hereinafter.

The jet delivery device 11 has passages and orifices for discharge of the gaseous jets, as will be explained hereinafter, and these jets are supplied from a manifold 12 with which the supply line 13 is associated.

The glass streams are developed from the tips or bulbs 10 in the influence of air currents induced by the jets and by the combined jet flow and these glass streams enter the combined jet flow and undergo attenuation in the manner described hereinafter. The attenuated fibers are guided by the duct 14 downwardly toward the perforated conveyor 15 serving as a fiber-collecting device, suction means such as the suction box 16 and the suction fan 17 being associated with the conveyor in a manner generally well known in this art.

As best seen in Figures 2 and 3, the jet device 11 is provided with pairs of jet orifices 18 and 19, a series of such pairs of orifices being indicated in Figure 3. Each orifice 18 is associated with a flow passage 20 in the jet device 11, which passage communicates with the manifold 12 and which has an angled end adjacent to the delivery orifice for directing the jet *a* downwardly. The orifice 19 is associated with a passage 21 also communicating with the manifold 12 and arranged to deliver the jet *a'* horizontally. In Figure 3, the jets delivered from each of the pairs of orifices are indicated at *a—a'*, *b—b'* and *c—c'*; and in this connection, it is noted that while three pairs of jets appear in the perspective view of Figure 3, only a single pair of jets *a—a'* appears in Figures 1 and 2.

As generally represented in Figures 1 and 2, the pair of jets at each fiberizing center, for instance jets *a—a'*, are directed at right angles toward each other and impinge upon each other in their common plane and produce a combined jet flow indicated at A in Figure 1, in which a stream of attenuable material is subjected to attenuation. The fibers formed from a series of fiberizing centers are deposited upon a foraminous conveyor or belt, above described, in the form of a fiber blanket B, as appears in Figure 1.

The attenuating action effected by the equipment, as described above, can best be explained and analyzed by reference to Figures 2 and 3.

The action at each fiberizing center is influenced by and related to the action of the jets or of the jet flow in adjoining fiberizing centers. In Figure 3, the illustration represents the action at the fiberizing centers corresponding to jets *a—a'*, *b—b'* and *c—c'*; whereas Figure 2 illustrates the action at the fiberizing center *a—a'* only.

In analyzing the operation, it is first pointed out that any gaseous jet delivered from an orifice induces ambient gas or air and the cross-sectional area of the jet thus expands as it leaves the delivery orifice. Arrows applied to Figures 2 and 3 indicate induced air currents, and the expansion of the jets also appears in Figures 2 and 3.

In the arrangement shown in these figures, the two jets of each pair are also directed so as to impinge upon each other in the common plane of the jets, and this results in lateral spreading or broadening of the combined jet flow, as is also clearly apparent in Figure 3. Still further, as the combined jet flow of each pair of jets spreads laterally, the adjoining combined flows of pairs of jets impinge upon each other.

This impingement of the adjoining combined flows of pairs of jets develops two pairs of miniature tornadoes in each jet flow, with the points of origin or apices of the tornadoes of each pair located at the points of impingement on the adjoining jets. In each pair of tornadoes, the two tornadoes are positioned in spaced relation toward opposite sides of the common plane of the axes of the pair of jets. When viewed as in Figures 2 and 3, the upper pair of these miniature tornadoes, indicated at *tu—tu*, have whirling currents circulating or turning in directions toward each other at the upper side of the tornadoes and away from each other at the lower side, as is indicated by the arrows in Figure 3. On the other hand, the lower pair of tornadoes, indicated by letters *tl*, turn in the opposite directions, as is also indicated by arrows.

Between the two pairs of tornadoes in each combined jet flow, in the region of impingement of adjoining jets upon each other, a zone L of laminar flow associated with the tornadoes is developed. This zone has high intensity inflow of induced air, and it is into this laminar flow zone, between the two tornadoes of the upper pair, that the stream of glass is introduced. As clearly appears in Figures 2 and 3, the stream S of the glass is developed from the glass bulb 10, which bulb or cone is located in a position horizontally offset from the jet delivery device. However, because the glass of the bulb 10 is in flowable condition as released from the delivery device, the stream S of glass is deflected from the horizontally offset position of the bulb toward the laminar flow zone L, this deflection occurring as a result of the intense inflow of induced air, and this effect assures entrance of the stream of attenuable material into the laminar zone. Indeed, even with some misalignment of the glass delivery device 9 with respect to the pairs of jets, the inflow of induced air will automatically compensate for such misalignment and bring the glass stream into proper position.

From the above, it will be seen that by developing the pairs of tornadoes with the intervening zone of laminar flow at each fiberizing center, and by delivering the attenuable material in flowable condition into the region near said zone, the induced air automatically carries the stream of attenuable material into the zone of laminar flow and automatically compensates for misalignment, thereby providing a highly stable introduction of the attenuable material into the system.

The arrangement as described above and the action of the induced air currents provides for stable introduction of the attenuable material into the system, even where the glass delivery devices are appreciably spaced away from the jet delivery devices, which is desirable in order to facilitate maintenance of appropriate temperature control for both the glass delivery devices and the jet delivery devices.

As seen in Figure 3, the pairs of tornadoes *tu* and *tl* tend to merge downstream of the laminar zone L, and as the flow progresses downstream, the tornadoes tend to lose their identity, as is indicated (toward the right of Figure 3) by the sectional showing of the two pairs of tornadoes originating with the jets *c—c'*.

As shown in Figures 2 and 3, each stream S of glass is subjected to attenuation in the jet flow downstream of the zone of laminar flow.

The action of the jets at each fiberizing center, particularly in the development of the pairs of tornadoes with the intervening zone of laminar flow, is achieved by employment of pairs of jets which are of substantially the same kinetic energy per unit of volume; preferably also, the jets of each pair do not widely differ in cross-sectional area. Advantageously, the cross-sectional area of the two jets is the same or approximately the same, and some difference is present, the cross-sectional area of one jet should not be more than about two times the cross-sectional area of the other jet, where the kinetic energy per unit of volume of the two jets is the same or substantially the same, as is preferred.

The jets need not necessarily have exactly the same cross-sectional dimensions in directions transverse to and parallel to the common plane of the axes of the two jets.

When the two jets of a pair are fed separately, one of them is desirably fed with air and the other one with a mixture of air and fuel (for instance 10 to 1), in order to obtain the stoichiometric mixture in the mixing zone and combustion zone.

It is also to be noted that for the purpose of establishing the zone of laminar flow, into which the stream of glass may be introduced without fragmentation, it is important that the jets be generated in positions so that their axes are directed substantially in a common plane and impinge upon each other in said plane, desirably at an angle within a range of about 10° to 90° from each other, although an angle somewhat greater than 90° may even be employed. Angles substantially less than 90°, for instance from about 30° to about 60°, are especially desirable because such angles tend to set up the localized combustion in the jet flow farther downstream of the jet orifices and this makes possible greater separation between the glass supply means and the jet devices.

In an embodiment such as shown in Figures 1 to 4, the desired localized zone of combustion is established by premixing fuel and comburent components and delivering the mixture to both jets through the common manifold 12. The specific manner of accomplishing this will be referred to more fully hereinafter, following description of the structure of other embodiments.

Turning now to the embodiment illustrated in Figure 5, it is first noted that the jet delivery device 11 is of the same shape and construction as the device 11 described above with reference to Figures 1 to 4. However, in Figure 5, instead of employing a single manifold feeding both the upper jet passages 20 and the lower jet passages 21, separate manifolds 12a and 12b are provided for the upper and lower jet passages, the manifolds 12a and 12b being supplied from separate supply lines 13a and 13b. By provision of these separate manifolds and separate supply lines, it is possible to deliver jet fluids of different composition, pressure, velocity or temperature to the upper and lower jet orifices.

As already noted, in the arrangement of Figures 1 to 4, the premixed fuel and comburent are supplied to both the upper and lower jets, but the arrangement of Figures 5 makes possible the delivery of the fuel through only one of the jets of each pair and would also make possible certain other variations in the feed, for instance, the supply of mixed fuel and comburent to the upper and lower jets of different composition or concentration. Still further, the arrangement of Figure 5 would make possible some variation in the kinetic energy per unit of volume of the individual jets of each pair.

Turning now to the embodiment illustrated in Figure 6, it will be noted that here the jet delivery device 11a comprises a hollow manifold of complex sectional configuration providing for arrangement of upper and lower jet orifices 18a and 19a respectively directed downwardly and horizontally in the same general relationship as in the embodiment of Figures 1 to 4 and in the embodiment of Figure 5; but since the delivery device 11a itself comprises a common manifold for feeding all of the jet orifices, the jet fluid would necessarily comprise premixed fuel and comburent components, as is also the case with the embodiment of Figures 1 to 4.

Figure 7 illustrates still another embodiment of equipment useable according to the present invention. In this embodiment, the jet delivery device 11b is provided with pairs of jet orifices 18b and 19b which are both fed from a common chamber or manifold within the device 11b and which, therefore, would comprise the same composition. However, in Figure 7, it will be noted that, instead of employing jets which are directed toward each other substantially at right angles, the jets are directed toward each other at a much smaller angle, for instance, an angle on the order of about 30°. Here again, it is contemplated that the jets of each pair have their axes lying in the same plane and further that a plurality of pairs be employed in side-by-side relation and positioned sufficiently close to each other so that the spreading combined jet flow of each pair will impinge upon the spreading combined jet flow of adjoining pairs, thereby developing the upper and lower pairs of tornadoes *tu* and *tl*. This configuration is also characterized by the presence of the laminar zone between the pairs of tornadoes at opposite sides of both jets; and in Figure 7, the glass stream S is shown as entering the laminar flow zone between the pair of tornadoes *tu*, as in Figure 2.

With regard to the feed of the fuel and comburent components, it is pointed out that in general, it is preferred that in the attenuation zone of the combined jet flow at each fiberizing center, for instance, just downstream of the point of introduction of the glass stream into the zone of laminar flow, the concentration of the fuel and the comburent should preferably comprise a stoichiometric mixture, so that the mixture will readily ignite and burn in a localized area concentrated in the region where most of the attenuation is actually occurring. This will provide maximum utilization of the energy of the fuel. In addition, with relatively hard glasses, this condition will provide the desired high temperature in the zone where the attenuation is occurring even though the supply of the glass delivered from the bushing is not at a temperature sufficiently high to provide the optimum viscosity for fiberization. Thus, the stream of glass which is delivered in flowable condition into the zone of laminar flow will reach, in the attenuation zone of the combined jet flow, the optimal conditions for fiberization because of the localized combustion in said attenuation zone.

In a typical embodiment of the equipment according to Figures 1 to 4, the orifice 18 and the passage 20 was of 1 mm diameter and the orifice 19 and the passage 21 of 1.5 mm diameter. The two jets were directed toward each other at 90°. The diameter of the glass delivery orifice was of 1.8 mm. With this equipment, a mixture of 80% by volume of $H_2$ in air was delivered through both jets at a pressure of 2.5 bar, the hydrogen flow rate being of 7 $Nm^3$ per hour and per pair of jets. The jets had a temperature of about 100°C. A molten material having the following composition: $SiO_2$: 45.85%, $TiO_2$: 2.75%, $Fe_2O_3$: 12.55%, $Al_2O_3$: 12.93%, $CaO$: 10.50%, $MgO$: 9.30%, $Na_2O$: 3.10%, $K_2O$: 1.20%, $P_2O_5$: 0.40%, ·miscellaneous: 1.42% by weight, was fed at a temperature of 1210°C to the fiberizing centers. The rate of glass flow (or pull rate) was 24 kg/hole for each 24 hour period, and with these operating conditions the average fiber produced was 9 microns in diameter. In a second example with a hard glass at a viscosity of 19 Pa s (190 poises), a mixture of 50% $H_2$ in air was used, with a hydrogen flow rate of 4 $Nm^3$ per hour and per pair of jets, the temperature of the jets being 100°C. In this case the fibers produced had a diameter averaging 25 microns.

The diameter of the fibers produced in these examples was about one third of the diameter resulting from the fiberization of the same materials under the same conditions except for the use of jets comprising air only, i.e., without the extra hydrogen.

In an embodiment such as shown in Figure 5, the jet delivered from the orifice 19 may desirably comprise air, and the jet delivered from the orifice 18 should comprise a mixture of the comburent and fuel. These two jets may be reversed and the jet from orifice 18 comprise air and the jet from orifice 19 comprise the mixture.

In all cases, it will be noted that the stream of attenuable material in flowable condition is delivered into the combined jet flow in the zone of laminar flow between the pairs of tornadoes and from a point which is offset toward one side of both jets of a pair and of said combined jet flow. In this way, stable input or feed of the glass streams into the fiberizing centers is assured. The streams of glass introduced should also have a temperature sufficiently above the ignition temperature of the mixture of fuel and comburent components, in order to assure ignition and combustion in the desired localized zone in which the fiber attenuation is concentrated. In order to assure ignition in the attenuation zone, it is desirable to utilize jets having at least some elevation in temperature, for instance in the neighborhood of 400°C, because in this way, the zone of ignition will be kept farther upstream than in the case where the jet temperature is very low. The jets should not be higher than the ignition temperature of the mixture, which in a typical case, would be of the order of 600°C. However, the jets may be introduced at lower temperatures, even down to ambient but for most purposes, the temperature of the jets is desirably at least 100°C and preferably between 200 and 400°C.

Although hydrogen is a preferred fuel for many purposes, certain other fuels may be used, such as natural or propane gases. Important considerations in selecting the fuel are the characteristics with respect to ignition temperature and flame propagation rate. A fuel, and also the quantity or concentration thereof, with respect to the comburent, should be selected to promote ready ignition and a high propagation rate. In this way, the zone of localized combustion is established in a region of the combined jet flow having substantial attenuating energy, thereby avoiding the need for very high temperature in the glass supply. Hydrogen is particularly desirable from these standpoints; and in order to promote ready ignition, the mixture should include at least the stoichiometric quantity of the fuel.

It is also pointed out that the configuration of the jet delivery system is not only effective in providing attenuating forces which will act upon the glass streams introduced, but is also effective in assuring thorough intermixture of the fuel and comburent components, even where they are separately introduced, as is contemplated in the embodiment illustrated in Figure 5.

In considering the ratio of fuel to comburent, it is first pointed out that under theoretically ideal conditions, stoichiometric proportions of fuel and comburent would be employed. However, a combustible mixture may be provided throughout a range varying from the stoichiometric ideal. Thus, in the case of the use of natural gas and air, the quantity of the air may range from about 0.8 to about 1.7 parts of the quantity of air providing stoichiometric proportions.

With such appropriate quantities of air and fuel, the zone of fiber attenuation comprises a combustible mixture, and this mixture in a typical technique according to the invention has an ignition point in a range below temperatures of typical molten glass compositions employed for fiberization, so that the delivery of the glass stream serves not only to introduce the attenuable material into the fiberizing zone but also serves to ignite the combustible mixture of the fuel and comburent brought into that zone by the jets. In consequence, the desired temperature, for example 1700°C, may readily be provided in the fiberization zone in order to provide for attenuation of the glass stream to form the fiber. The fiberizing zone may be at 1700°C, notwithstanding the fact that the temperature of the jets upstream of the combined jet flow and downstream of the zone of fiberization may be at a much lower temperature.

Various gaseous fuels may be employed such as natural, propane or other manufactured gases. Hydrogen is also an effective fuel to employ and is particularly desirable where it is of importance to control or shorten the length of the zone of combustion and thus maintain the zone well upstream in the combined jet flow.

**Claims**

1. A method for manufacturing fibers from attenuable material, such as a thermoplastic material, by attenuation by means of gaseous currents, characterized in that at a plurality of pairs of gaseous jets (a—a', b—b', c—c') are developed, the jets of each pair having substantially equal kinetic energy per unit of volume, and whose axes are disposed in substantially the same plane, the two jets (e.g. a—a') inducing ambient gas and converging so as to provide mutual impact and lateral spreading of the flow formed by the two combined jets, the pairs of jets being in side-by-side relation and sufficiently close to each other so as to provide for impingement of the spreading combined flow of each pair of jets upon the spreading combined flow of adjoining pairs of jets and thereby generating tornadoes (tu, tl) and having a zone of laminar flow (L) intervening between the tornadoes, the jets comprising fuel and comburent components in proportions providing a combustible mixture in the combined jet flow, and delivering a stream of attenuable material into said combined jet flow in the zone of laminar flow and from a point offset toward one side of both jets of the pair and of said combined jet flow, the stream of attenuable material being delivered into said zone at a temperature at least as high as the ignition temperature of said mixture, the mixture being ignited in the combined jet flow.

2. A method as defined in Claim 1 in which the jets (e.g. a—a') of the pairs each comprise a mixture of fuel and comburent.

3. A method as defined in Claim 1 in which one of the jets (e.g. a) of the pairs comprises said fuel component, and the other of the jets (e.g. a') of said pairs comprises the comburent component.

4. A method as defined in any of the preceding Claims in which the fuel component comprises hydrogen and in which the comburent component comprises air.

5. A method as defined in Claim 4 in which the ratio of the hydrogen to air is from about four parts to about six parts of hydrogen for each part of air.

6. A method as defined in any of the preceding Claims in which the angle included between the axes of the jets (e.g. a—a') of each pair is between 10° and 90°.

## Patentansprüche

1. Verfahren zur Herstellung von Fasern aus ausziehbarem, z. B. thermoplastischem Material durch Ausziehen mittels Gasströmen, dadurch gekennzeichnet, dass eine Vielzahl von Paaren aus Gasstrahlen (a—a', b—b', c—c') gebildet wird, wobei die Strahlen jeden Paares im wesentlichen die gleiche kinetische Energie pro Volumeneinheit aufweisen und mit ihren Achsen im wesentlichen in der gleichen Ebene liegen, wobei die beiden Strahlen (z, B. a—a') Umgebungsgas induzieren und derart konvergieren, dass sie einen gegenseitigen Aufprall und eine seitliche Verbreiterung der durch die zwei kombinierten Strahlen gebildeten Strömung hervorrufen und die Strahlenpaare Seitean-Seite und so eng beieinander liegen, dass ein Auftreffen der sich verbreiternden kombinierten Strömungen jedes Strahlen-paares auf die sich verbreiternde kombinierte Strömung angrenzender Strahlenpaare vorgesehen wird und dadurch Wirbeln (tu, tl) erzeugt werden und zwischen den Wirbeln eine Zone laminarer Strömung (L) entsteht, und wobei die Strahlen Brennstoff- und Verbrennungsmittel in solchen Anteilen enthalten, dass ein brennbares Gemisch in der kombinierten Strahlenströmung entsteht, und dass ein Strom ausziehbaren Materials in diese kombinierte Strahlen-strömung in der Zone der laminaren Strömung und von einer gegen einer Seite beider Strahlen des Paares und der kombinierten Strahlenströmung versetzten Stelle aufgegeben wird, wobei der Strom aus ausziehbarem Material in diese Zone mit einer Temperatur aufgegeben wird, die wenigstens so hoch wie die Zündtemperatur des Gemisches ist, und das Gemisch in der kombinierten Strahlen-strömung gezündet wird.

2. Verfahren nach Anspruch 1, dadurch gekennzeichnet, dass die Strahlen (z. B. a—a') des Paares jeweils ein Gemisch aus Brennstoff und Verbrennungsmittel enthalten.

3. Verfahren nach Anspruch 1, dadurch gekennzeichnet, dass einer der Strahlen (z. B. a) des Paares den Brennstoffanteil und der andere der Strahlen (z. B. a') des Paares den Verbrennungsmittelanteil enthält.

4. Verfahren nach einem der vorhergehenden Ansprüche, dadurch gekennzeichnet, dass der Brennstoffanteil Wasserstoff und der Verbrennungsmittelanteil Luft enthält.

5. Verfahren nach Anspruch 4, dadurch gekennzeichnet, dass das Verhältnis von Wasserstoff zu Luft etwa 4 bis etwa 6 Teile Wasserstoff auf ein Teil Luft ist.

6. Verfahren nach einem der vorhergehenden Ansprüche, dadurch gekennzeichnet, dass der Winkel zwischen den Achsen der Strahlen (z. B. a—a') jeden Paares zwischen 10 und 90° liegt.

## Revendications

1. Procédé pour la production de fibres à partir de matériau étirable, tels qu'un matériau thermoplastique, par étirage au moyen de courants gazeux, caractérisé en ce qu'une pluralité de paires de jets (a—a', b—b', c—c') est produite, les jets de chaque paire ayant pratiquement la même énergie cinétique par unité de volume, et leurs axes pratiquement dans un même plan, les deux jets (par exemple a—a') induisant de l'air ambiant et convergeant formant un impact et l'épanouissement latéral du flux des deux jet combinés, les paires de jets étant disposés côte à côte suffisamment près les unes des autres pour aboutir à la rencontre du flux combiné épanoui de chaque paire de jets avec le flux combiné épanoui des paires dejets voisines et formant ainsi des tourbillons (tu, tl), et présentant une zone d'écoulement laminaire (L) située entre les tourbillons, les jets contenant des composés combustibles et comburants dans des proportions aboutissant à un mélange inflammable dans le flux combiné, et conduisant un filet de matériau étirable dans le flux combiné dans la zone d'écoulement laminaire à partir d'un point situé à l'extérieur des jets du côté d'un des jet de la paire et du flux combiné, le filet de matériau étirable étant conduit dans cette zone à une température au moins égale à la température d'inflammation de ce mélange, le mélange s'enflammant dans le flux combiné.

2. Procédé selon la revendication 1, dans lequel les jets (par exemple a—a') de la paire contiennent chacun un mélange de comburant et combustible.

3. Procédé selon la revendication 1, dans lequel un des jets de la paire (par exemple a) contient ledit composé combustible et l'autre jet (par exemple a') de ladite paire contient le composé comburant.

4. Procédé selon l'une quelconque des revendications précédentes dans lequel le composé combustible est de l'hydrogène et le composé comburant est de l'air.

5. Procédé selon la revendication 4, dans lequel la proportion d'hydrogène par rapport à l'air est d'environ 4 à 6 parties d'hydrogène pour 1 partie d'air.

6. Procédé selon l'une quelconque des revendications précédentes dans lequel l'angle entre les axes des jets (par exemple a—a') de chaque paire est compris entre 10 et 90°.

FIG. 1.

**FIG. 2.**

**FIG. 5.**

**FIG. 4.**

FIG. 3

FIG. 6.

3

0 009 066

FIG. 7.

4